# EUROPEAN PATENT APPLICATION

(11) **EP 1 369 393 A2**
(43) Date of publication of application: **10.12.2003**
(21) Application number: 03019333.8
(22) Date of filing: 16.11.1998
(51) Int. Cl.: C03B 37/012, C03B 37/014, C03B 37/027

(54) **Apparatus for heating and drawing a glass preform**

(30) Priority: 17.11.1997 JP 31511797
(62) Divisional of application: 98121792.0
(71) Applicant: SHIN-ETSU CHEMICAL CO., LTD., Chiyoda-ku Tokyo (JP)
(72) Inventor: Sakashita, Mitsukuni, Annaka-shi Gunma Prefecture (JP); Hoshino, Shoji, Annaka-shi Gunma Prefecture (JP); Shimada, Tadakatsu, Annaka-shi Gunma Prefecture (JP); Yamamura, Waichi, Annaka-shi Gunma Prefecture (JP); Hirasawa, Hideo, Annaka-shi Gunma Prefecture (JP)
(74) Representative: von Bülow, Tam, Dr.

(57) **Abstract**

The glass base material drawing apparatus for heating and drawing a glass base material has a storage unit for storing the glass base material having an opening unit that is opened along the longitudinal direction of the storage unit when the glass base material is placed inside the storage unit, a heating unit for heating the glass base material that has been stored inside the storage unit via the opening unit, and a pull-out unit for pulling out the glass bse material heated by the heating unit. The opening unit may be opened in such a manner that the glass base material is moved from a side direction of the storage unit into the interior of the storage unit. A main axis for supporting the glass base material is connected to the glass base material. The storage unit may have a penetration hole through which the main axis is inserted when the opening unit is closed.

## Description

### BACKGROUND OF THE INVENTION

### 1. Field of the Invention

The present invention relates to a glass base material drawing apparatus which draws a glass rod until the outside diameter of the glass rod reaches a prescribed value to obtain a glass rod having a prescribed diameter (for example, an optical fiber base material).

### 2. Description of the Related Art

JP-A-06 199 536 discloses an apparatus and method for drawing an optical fiber from a preform which is stored in a cylindrical housing chamber. The housing chamber consists of two half cylinders which can be moved sidewards allowing the introduction of the preform. Below the housing chamber there is provided a drawing chamber comprising a heater. Between the housing chamber and the drawing chamber there is provided a shutter.

DE-A-39 29 894 describes a method and apparatus for drawing an optical fiber from cylindrical preforms which are stored in a magazine. The preforms are introduced into a chuck and moved downwards thereby joined end-to-end at the top of the preform. The preform is heated by a furnace which melts the glass material for generating an optical fiber.

JP-A-05 078 139 describes an optical fiber drawing device comprising several pairs of taking-off units for taking-off a preform vertically downwards.

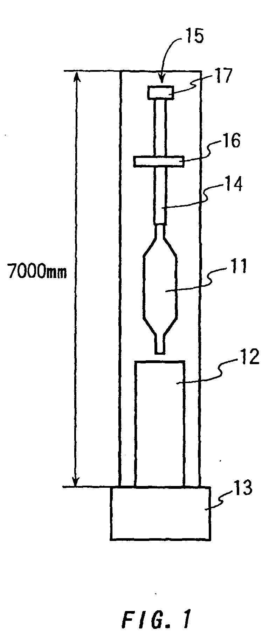

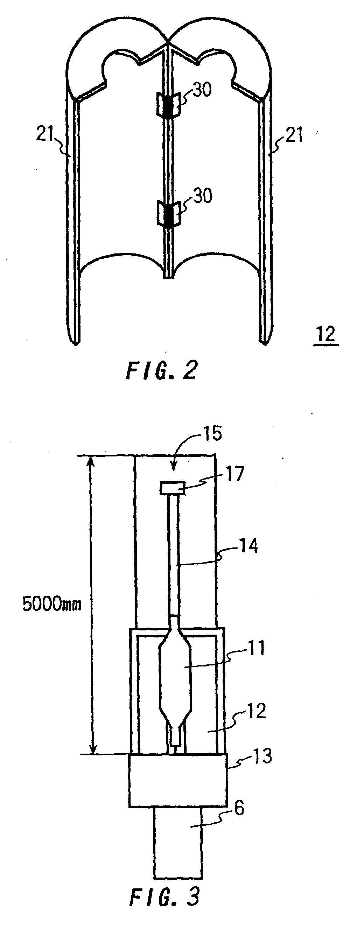

Fig. 1 is a schematic drawing of the neighborhood of a heating furnace of a glass base material drawing apparatus nearby according to the prior art. When an optical fiber base material is drawn until the diameter of the optical fiber base material reaches a desired value, it is necessary to prevent foreign materials in the air from adhering to the pre-drawn glass base material 11 before the pre-drawn glass base material 11 is placed in a heating furnace 13. In order to achieve this objective, the glass base material 11 must be held in a storing container 12 before the glass base material 11 is placed in the heating furnace 13. In the prior art, a cylindrical container as shown in Fig. 3 was used as a storing container, and the cylindrical container was kept airtight by closing the top of the storing container 12 with a lid 16.

When the conventional cylindrical container 12 is used, however, the glass base material 11 needs to be shifted temporarily upward above the storing container 12 in order to install the glass base material 11 to the drawing apparatus. For this reason, the glass base material drawing apparatus is made very large. As the size of the glass base material 11 is increased, the size of the storing container is also increased. As a result, the size of the drawing apparatus is also increased. Therefore, the operation efficiency of the drawing apparatus deteriorates.

### SUMMARY OF THE INVENTION

Given this problem, it is an object of the present invention to provide a glass base material drawing apparatus which solve the above-stated problem.

According to the first aspect of the present invention, a glass base material drawing apparatus for heating and drawing a glass base material is provided. This glass base material drawing apparatus has a storage unit for storing the glass base material having an opening unit that is opened along the longitudinal direction of the storage unit when the glass base material is placed inside the storage unit, a heating unit for heating the glass base material that has been stored inside the storage unit via the opening unit, and a pull-out unit for pulling out the glass base material heated by the heating unit.

The opening unit may be opened in such a manner that the glass base material is moved from a side direction of the storage unit into the interior of the storage unit. A main axis for supporting the glass base material is connected to the glass base material. The storage unit may have a penetration hole through which the main axis is inserted when the opening unit is closed.

The opening unit may be opened in such a manner that the main axis is installable from a side direction of the storage unit to a position that passes through the penetration hole. When the opening unit is opened, at least a portion of the circumference of the penetration hole may be opened. The storage unit may have, for example, a cylindrical pipe unit and an end surface formed on the top surface of the pipe unit. The opening unit may be formed at the center of the end surface.

The storage unit is divisible into two or more sub-storage units along the axial direction of the storage unit. The opening unit may be opened by moving at least one of the sub-storage units away from the remaining sub-storage units. The storage unit may further have hinges which couple the two or more sub-storage units with each other. The storage unit may be divisible into two sub-storage units by a plane that passes through the axis of the storage unit.

### BRIEF DESCRIPTION OF THE DRAWINGS

- Fig. 1: is a schematic view of the neighborhood of a heating furnace of a conventional glass base material drawing apparatus.
- Fig. 2: is an oblique view of an example of a storing container of a glass base material drawing apparatus according to the present invention.
- Fig. 3: is a schematic view of the neighborhood of a heating furnace of a glass base material drawing apparatus according to the present invention when the storing container is opened.
- Fig. 4: is an oblique view of a conventional storing container.
- Fig. 5: shows the structure of a storage unit 12 in another embodiment of the present invention.

### DETAILED DESCRIPTION OF THE INVENTION

Fig. 2 shows an example of a storing container 12 installed in a glass base material drawing apparatus according to the present invention. This storing container 12 is constructed as follows. First, a cylinder is cut vertically into two identical half-cylinders 21 along a plane containing the central axis of the cylinder. The two holf-cylinders 21 are then connected with hinges 30 as shown in Fig. 2. Hence, the resultant storage container 12 can be opened or closed freely.

When a glass base material 11 is installed on the drawing apparatus, the storage container 12 is opened to store the glass base material 11 in the storage container 12 from a side direction. Once the glass base material 11 is stored inside the storage container 12, the storage container 12 is closed. Thus, the storage container 12 is kept airtight.

As a result, the glass base material 11 does not need to be shifted upward to the top portion of the storage container 12 when the glass base material 11 is installed. Therefore, the shift distance of the glass base material 11 can be reduced in installing the glass base material 11. As a result, the height of the drawing apparatus can be reduced in comparison with the conventional storing container that cannot be opened or closed.

The above-described storage container 12 is divided into two parts. However, the storage container 12 may be divided into three or more parts. It is desirable to divide the storage container 12 into two to four parts to manufacture and operate the storage container 12 easily. It is also desirable to divide the storage container 12 along the longitudinal direction.

The storage container 12 can be made of a conventional material. However, it is desirable tat the storage container 12 be made of stainless steel or the like to make the storage container 12 heat resistant. It is also desirable that the storage container 12 be completely sealed with hinges so that dusts will not be generated when the storage container 12 is opened or closed.

In addition to the storage container 12, the glass base material drawing apparatus according to the present invention has a heating furnace 13 which heats and softens a glass base material 11, a supply mechanism 17 which supplies a glass base material 11, and a pull-out mechanism 6 for pulling out the glass base material 11 heated by the heating furnace 13.

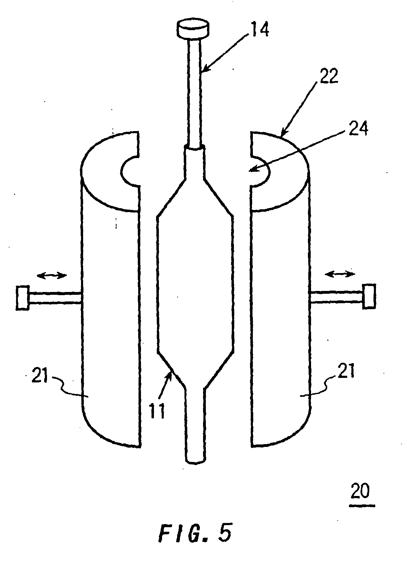

Fig. 5 shows the structure of a storage unit 12 in another embodiment of the present invention. The storage unit 12 is divided into two half-cylinder units 21. In a state in which the two half-cylinder units 21 are closed, the storage unit 12 has a cylindrical shape. A circular penetration hole 24 is formed at the center of the top surface 22 of the storage unit 12. By moving one of the two half-cylinder units 21 away from the other of the two half-cylinder units 21 or by moving the two half-cylinder units 21 away from each other, the main axis 14 and the glass base material 11 can be installed from a side direction of the storage unit 12 into the interior of the storage unit 12. After this, by closing the two half-cylinder units 21, the glass base material 11 and the main axis 14 can be stored inside the storage unit 12.

Next, an example of the present invention will be explained.

### (EXAMPLE)

A cylindrical glass base material storage container 12, which has a diameter of 210mm and a height of 1800mm and is divided into two parts coupled by hinges 30 as shown in Fig. 2, was prepared. This storage container 12 was installed on a glass base material drawing apparatus having a heating furnace 13, a supply mechanism 17, and a pull-out mechanism 6 as shown in Fig. 3.

A glass rod having a diameter of 150mm and a length of 2500mm was installed as a glass base material 11 on this glass base material drawing apparatus. The glass base material 11 can be drawn if the length of the main axis 14 is 2000mm. Taking this length and the length 2500mm of the glass base material 11 into consideration, the length of the frame 15 of the drawing apparatus measured from the top surface of the heating furnace 13 to the top surface of the frame 15 turned out to be about 5m.

### (COMPARATIVE EXAMPLE)

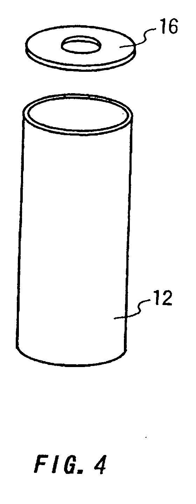

Except that the conventional storage container shown in Fig. 3 was used, a glass base material drawing apparatus was constructed in the same manner as in the above-described embodiment (see Fig. 4).

A length of approximately 2000mm was needed for the height of the storage container 12 as well as for the length of the main axis 14. Combining these lengths with the length of the glass base material 11, a length of approximately 7m was needed for the length of the frame 15 of the drawing apparatus in the direction of the axis before the glass base material 11 was placed in the heating furnace 13. The refuge shift length of the glass base material 11 when the glass base material 11 was installed turned out to be 2000mm.

According to the present invention, the glass base material does not need to be shifted upward in the axial direction to give refuge to the storage container. Therefore, the shift length of the glass base material in installing the glass base material on the drawing apparatus is reduced. As a result, the glass base material can beinstalled more easily, and the overall size of the drawing apparatus is also reduced.

## Claims

1. A glass base material drawing apparatus for heating and drawing a glass base material, **characterized by** comprising:
a storage unit (12) for storing said glass base material (11), said storage unit (12) having an opening unit through which said glass base material (11) is placed inside said storage unit (12), said opening unit being opened along a longitudinal direction of said storage unit (12) when said glass base material (11) is placed inside said storage unit (12), wherein said opening unit is opened so as to install said glass base material (11) into said storage unit (12) moving said glass base material (11) from a side direction of said storage unit (12) into an interior of said storage unit (12);
a heating unit (13) for heating said glass base material (11) that has been stored inside said storage unit (12) via said opening unit; and
a pull-out unit (6) for pulling out said glass base material (11) heated by said heating unit (13).

2. A glass base material drawing apparatus as claimed in claim 1, **characterized in that** a main axis (14) for supporting said glass base material (11) is connected to said glass base material (11), and said storage unit (12) has a penetration hole (24) through which said main axis (14) passes while said opening unit is closed.

3. A glass base material drawing apparatus as claimed in claim 2, **characterized in that** said opening unit is opened so as to have said main axis (14) installed from said side direction of said storage unit (12) to a position passing through said penetration hole (24).

4. A glass base material drawing apparatus as claimed in claim 3, **characterized in that** at least a portion of a circumference of said penetration hole (24) is opened when said opening unit is opened.

5. A glass base material drawing apparatus as claimed in claim 2, **characterized in that** said storage unit (12) comprises a pipe and an end surface (22) formed on a top surface of said pipe and said opening unit is formed at a center of said end surface (22) of said pipe unit.

6. A glass base material drawing apparatus as claimed in claim 5, **characterized in that** said pipe unit is cylinder-shaped.

7. A glass base material drawing apparatus as claimed in claim 3, **characterized in that** said storage unit (12) is divisible into two or more sub-storage units (21) along an axis of said storage unit (12) and said opening unit is opened by moving at least one of said sub-storage units (21) away from other sub-storage units (21).

8. A glass base material drawing apparatus as claimed in claim 7, **characterized in that** said storage unit (12) further has hinges (30) for coupling said two or more sub-storage units (21) with each other.

9. A glass base material drawing apparatus as claimed in claim 7, **characterized in that** said storage unit (12) is divisible into two sub-storage units (21) by a plane that passes through said axis of said storage unit (12).
